Europäisches Patentamt

European Patent Office

Office européen des brevets

(11) Veröffentlichungsnummer : **0 119 585**
**B1**

(12) # EUROPÄISCHE PATENTSCHRIFT

(45) Veröffentlichungstag der Patentschrift :
**11.11.87**

(51) Int. Cl.⁴ : **F 24 H   1/20, F 24 H   1/18,**
**F 24 H   1/44, F 24 D  17/00**

(21) Anmeldenummer : **84102758.4**

(22) Anmeldetag : **14.03.84**

(54) Vorratswasserheizanlage.

(30) Priorität : **19.03.83 DE 3310023**

(43) Veröffentlichungstag der Anmeldung :
**26.09.84 Patentblatt 84/39**

(45) Bekanntmachung des Hinweises auf die Patenterteilung : **11.11.87 Patentblatt 87/46**

(84) Benannte Vertragsstaaten :
**AT BE CH DE FR GB IT LI LU NL SE**

(56) Entgegenhaltungen :
**CH-A-   125 802**
**CH-A-   269 450**
**DE-A- 3 019 810**
**DE-C-   366 994**
**US-A- 2 335 918**

(73) Patentinhaber : **Ruhrgas Aktiengesellschaft**
**Huttropstrasse 60 Postfach 10 32 52**
**D-4300 Essen 1 (DE)**

(72) Erfinder : **Jannemann, Theo**
**Am Nonnenkamp 11**
**D-4270 Dorsten 1 (DE)**
Erfinder : **Brünje, Horst**
**Ehlingstrasse 92**
**D-4350 Recklinghausen (DE)**

(74) Vertreter : **Zenz, Joachim Klaus et al**
**Am Ruhrstein 1**
**D-4300 Essen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorratswasserheizanlage, bei der das Brauchwasser mit Hilfe eines Brenners beheizt wird. Insbesondere bezieht sich die Erfindung auf eine Vorratswasserheizanlage mit einem Speicherbehälter, einem mit einer Umwälzpumpe versehenen Ladekreis, der an zwei beabstandeten Stellen in den Speicherbehälter mündet und über diesen geschlossen ist, ferner mit einem Brenner und mit einem Abgaswärmetauscher zum Aufwärmen des durch den Ladekreislauf geführten Brauchwassers des Speicherbehälters. Eine derartige Vorrichtung ohne umwälzpumpe ist aus der US-A-2 335 918 bekannt.

Bekannte Vorratswasserheizanlagen dieser Art haben einen nur ungenügenden Kondensationsgrad des Abgaskondensats und einen ebenfalls ungenügenden Aufheizwirkungsgrad.

Es ist daher Aufgabe der Erfindung, die Vorratswasserheizanlage als Brennwert-Vorratwasserheizer derart auszubilden, daß ein Kondensationsgrad des Abgaskondensats, verbunden mit verbesserten Aufheizwirkungsgraden und verminderten Stillstandsverlusten erreicht werden.

Die Lösung dieser Aufgabe besteht erfindungsgemäß darin, daß

der Brenner als Sturzbrenner ausgebildet und am oberen Ende eines vertikal verlaufenden Abgasführungsrohrs angeschlossen ist,

ein den Abgaswärmetauscher bildendes Wärmetauscherprofil mit sternförmigem Querschnitt koaxial im Abgasführungsrohr angeordnet ist und eine Mittelbohrung hat, durch die der Ladekreislauf mit einer dem Abgasstrom entgegengerichteten Brauchwasserströmung geführt ist, und

der Brenner und/oder der Volumenstrom durch den Ladekreis in Abhängigkeit von wenigstens einem im Speicherbehälter angeordneten Temperaturfühler derart geregelt ist oder sind, daß eine im wesentlichen konstante Warmwasser-Temperatur für die Brauchwasserentnahme über den Sekundärkreislauf eingestellt werden kann.

Vorzugsweise verläuft das Abgasführungsrohr konzentrisch durch den im wesentlichen zylindrischen Speicherbehälter.

Diese Kombination aus (a) einem Sturzbrenner, (b) einer Abgasführung von oben nach unten durch ein besonders ausgebildetes und angeordnetes Wärmetauscherprofil und (c) der Führung des aufzuheizenden Brauchwassers im Gegenstrom durch ein zum Wärmetauscherprofil konzentrisches Mittelrohr führt unter Kondensationswärmenutzung zu einem außerordentlich hohen Aufheizungswirkungsgrad. Letzterer ermöglicht bei niedriger Nennwärmebelastung des Brenners eine Erwärmung des bodenseitig in den Abgaswärmetauscher eintretenden Brauchwassers von einem Temperaturniveau von beispielsweise 15 °C in einem Schritt auf beispielsweise 60 °C. Entsprechend hoch ist auch der Kondensationsgrad. Das Abgas wird im Wärmetauscherprofil von dem im Gegenstrom geführten Kaltwasser bis unterhalb des Taupunktes abgekühlt. Die zum Aufheizen des Wasser um ein $\Delta T$ von beispielsweise 45 °K erforderliche geringe Brennerleistung führt in Verbindung mit geringen Wasser-Umlaufmengen zu langen Betriebszeiten und geringen Schalthäufigkeiten des Brenners.

Eine besonders gute Wärmetauschwirkung und eine wesentliche Verringerung der Herstellungskosten des Abgaswärmetauschers lassen sich in Weiterbildung der Erfindung dadurch erreichen, daß das Wärmetauschprofil ein Strangpreßprofil aus einer Aluminiumlegierung ist. Die Aluminiumlegierung ist dabei vorzugsweise so gewählt, daß sie eine gute Korrosionsbeständigkeit gegenüber dem Abgaskondensat hat. Das Wärmetauscherprofil kann dabei mit einer Eloxalschicht versehen sein, die sowohl einem Korrosionsangriff des Abgases als auch einem Festsetzen von Korrosionsablagerungen entgegenwirkt. Das als Trinkwasser geeignete Brauchwasser wird nicht direkt durch die Mittelbohrung des Wärmetauscherprofils, sondern durch ein in die Mittelbohrung eingepreßtes Kupferrohr geführt, das sich leicht in die ebenfalls aus Kupferrohren bestehende übrige Verrohrung des Ladekreises einbinden läßt.

Bei einer bevorzugten und baulich besonders einfachen Ausführungsform der erfindungsgemäßen Vorratswasserheizanlage ist ferner vorgesehen, daß der Ladekreis mit dem Kaltwassereintritt im Bodenbereich des Speicherbehälters verbunden, von unten in das Mittelrohr des Wärmetauscherprofils geführt und nach Verlassen des Wärmetauscherprofils in den oberen Bereich des Speicherbehälters zurückgeführt ist. Das direkt in das Mittelrohr eingeführte und im Gegenstrom durch das Wärmetauscherprofil geleitete Kaltwasser sorgt für eine Abkühlung des Abgasstroms bis unterhalb des Taupunktes.

Die Erfindung ist dadurch weitergebildet, daß der Brenner mit überstöchiometrischer Verbrennung arbeitet und eine kreisförmige Brennerplatte mit einer Vielzahl von Gemischdurchtrittsöffnungen eines Durchmessers von 1 bis 2 mm, vorzugsweise 1,8 mm, aufweist, daß die Brennerplatte am oberen Ende des Wärmetauscherprofils befestigt ist, daß das wasserführende Rohr des Ladekreises durch die Brennerplatte durchgeführt ist und mit der Brennerplatte zu deren Kühlung in wärmeleitender Verbindung steht. Eine bevorzugte Ausführungsform ist dadurch gekennzeichnet, daß die Gemischdurchtrittsöffnungen ringförmig in der Brennerplatte angeordnet sind und letztere von dem wasserführenden Rohr konzentrisch durchsetzt ist.

Eine besonders einfache Regelanordnung der Vorratswasserheizanlage ist dadurch gekennzeichnet, daß ein die Wassertemperatur im unteren Bereich des Speicherbehälters messender erster Temperaturfühler und ein die Wassertemperatur im oberen Bereich des Speicherbehälters messender zweiter Temperaturfühler vorgesehen sind, die im Schaltkreis des Brenners angeordnete Kontakte oder Schalter betätigen, daß ferner der Brenner durch den ersten Temperaturfühler einschaltbar ist, wenn dessen Meßtemperatur eine untere Grenztemperatur, beispielsweise bei 55 °C, unterschreitet und daß der Brenner durch den zweiten Temperaturfühler ausschaltbar ist, wenn dessen Meßtemperatur einen oberhalb der unteren Grenztemperatur gelegenen oberen Temperaturgrenzwert, beispielsweise 60 °C überschreitet. Bei entsprechend geringer Umlaufmenge können mit dieser Regelanordnung relativ lange Betriebszyklen und geringe Schalthäufigkeiten des Brenners eingestellt werden.

Zur Einstellung der Wasser-Umlaufmengen durch den Ladekreis in Abhängigkeit vom Temperaturgefälle im Speicherbehälter ist in Weiterbildung der Erfindung vorgesehen, daß im Ladekreis eine verstellbare Drossel eingebaut ist. Diese wird bei niedrigem Rücklauftemperaturniveau (Kaltwasser), z. B. bei erstmaligem Aufladen oder bei Brauchwasserentnahme in eine die Umlaufmenge stark drosselnde Stellung gesetzt und bei relativ hohem Rücklauftemperaturniveau, beispielsweise bei einer Nachladung, voll geöffnet, so daß das stark unterschiedliche ΔT durch eine entsprechende Volumenstromerhöhung ausgeglichen wird. Dabei ist in der Wasser-Entnahmeleitung ein Strömungsschalter angeordnet, der so mit einem das Stellglied der Drossel steuernden Schaltkreis verbunden ist, daß bei Warmwasserentnahme der Volumenstrom im Ladekreis auf einen vorgegebenen Wert gedrosselt wird. Ferner ist in dieser bevorzugten Ausführungsform der Erfindung nahe des Kaltwassereintrittsstutzens im Bodenbereich des Speicherbehälters ein weiterer Temperaturfühler angeordnet, der so mit dem das Stellglied der Drossel steuernden Schaltkreis gekoppelt ist, daß bei einer der Kaltwassertemperatur entsprechenden Meßtemperatur im Speicherbehälter der Volumenstrom im Ladekreis auf den vorgegebenen Wert gedrosselt wird.

Anstelle dieser baulich einfachen und wirkungsvollen Zweipunkt-Regelung der Wassertemperatur im Speicherbehälter kann auch eine modulierende bzw. kontinuierliche Regelung des Brenners oder eine stufenlos regelbare Umwälzpumpe vorgesehen sein, die eine Drossel im Ladekreislauf überflüssig macht.

Im folgenden wird die Erfindung anhand eines in der Zeichnung dargestellten Ausführungsbeispiels näher erläutert. In der Zeichnung zeigen :

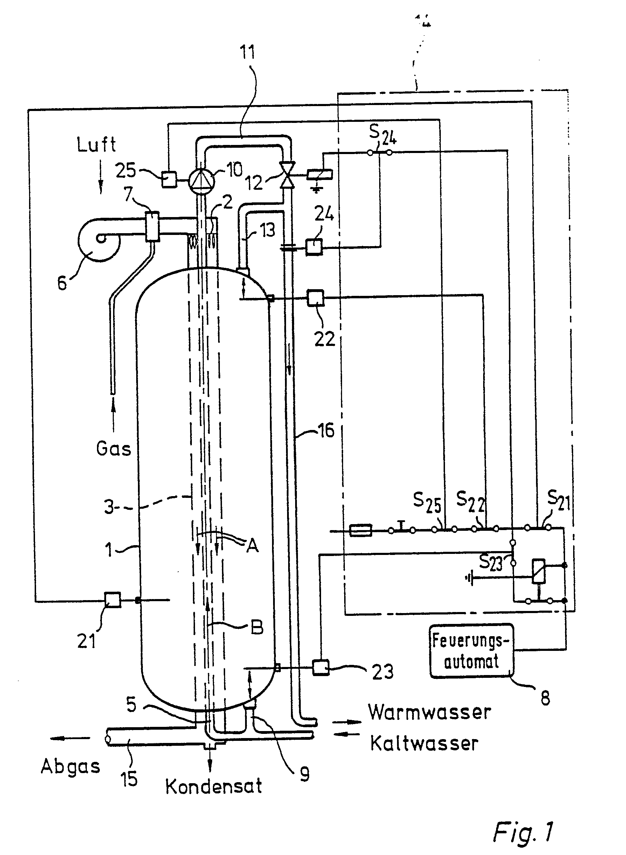

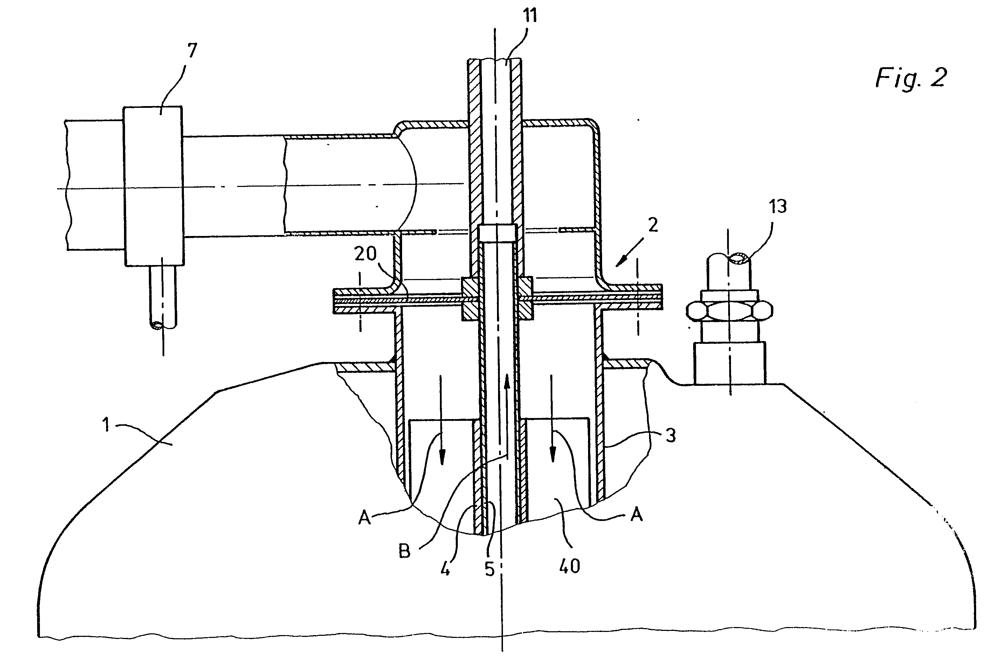

Fig. 1 das Ausführungsbeispiel der neuen Brennwert-Vorratsheizanlage in einem Funktionsschaubild, wobei die herkömmlichen Verbindungen zwischen einem Feuerungsautomaten und Betriebsmittelleitungen aus Übersichtlichkeitsgründen fortgelassen sind und Fig. 2 eine teilweise geschnittene Ansicht des Kopfteils des Speicherbehälters mit angebautem Brenner und in den Abgaswärmetauscher übergehendem Austreiberrohr.

In dem schematischen Funktionsschaubild gemäß Figur 1 sind die wesentlichen Komponenten der neuen Brennwert-Vorratswasserheizanlage dargestellt.

Ein etwa zylindrischer Speicherbehälter, der bei dem beschriebenen Beispiel etwa 200 l Wasser faßt, ist mit vertikal verlaufender Zylinderachse angeordnet und hat zur Erzielung einer guten Temperaturschichtung eine relativ schmale und hohe Bauweise. Ein überstöchiometrisch vormischender Brenner 2 ist an der Kopfseite des Speicherbehälters 1 angeordnet und mit einem mittig durch den Speicherbehälter verlaufenden vertikalen Abgasführungsrohr 3 verbunden. Letzteres ist an den Enden zum Wasserraum des Speicherbehälters 1 hin dicht verschweißt.

In dem Abgasführungsrohr 3 ist ein Wärmetauscherprofil 4 koaxial angeordnet, das mit einer Mittelbohrung versehen ist. Ein Kupferrohr 5 ist in die Mittelbohrung eingepreßt, das sich leicht in die in der Regel ebenfalls aus Kupferrohren bestehende Anschlußverrohrung einbinden läßt und das den Ladekreis durchdringende Trinkwasser vor Verunreinigungen schützt. Das Wärmetauscherprofil ist in dem beschriebenen Beispiel ein Strangpreßventil aus einer gegenüber dem anfallenden Abgaskondensat gut korrosionsbeständigen Aluminiumlegierung. Eine Eloxalschicht auf den Abgas führenden Flächen des Wärmetauscherprofils verhindert einerseits einen Korrosionsangriff und andererseits ein Festsetzen von Korrosionsablagerungen. Anstelle des Strangpreßprofils können auch herkömmliche, vorzugsweise eloxierte Rippenrohre verwendet werden, deren Rippenfüße mit dem Innenrohr des Wärmetauscherprofils in wärmeleitender Verbindung stehen.

Wie in Figur 2 gezeigt ist, weist der überstöchiometrisch vormischende Brenner 2 eine kreisförmige Brennerplatte 20 auf, die direkt am Abgasführungsrohr 3 angeflanscht ist. Diese Brennerplatte hat eine Vielzahl von Gemischdurchtrittsöffnungen mit einem Durchmesser von 1-2 mm, vorzugsweise von 1,8 mm. Die Lamellen oder Rippen 40 des Wärmetauscherprofils 4 enden kurz unterhalb der kreisförmigen Brennerplatte 20. Das in die Mittelbohrung eingepreßte Kupferrohr ist wärmeleitend mit der Brennerplatte 20 verbunden. Da das Kupferrohr 5 als Bestandteil des Ladekreises im Betrieb wasserführend ist, trägt es zu der bei diesen Brennern erforderlichen Kühlung wesentlich bei.

Da der Brenner 2 als Sturzbrenner arbeitet und wegen des fehlenden Auftriebs der Abgase, ist ein Verbrennungsluftventilator 6 geringer Leistung vorgesehen. Ein Mischer 7 mischt die Verbrennungsluft aus dem Ventilator 6 mit dem über eine Gasleitung zugeführten Brennstoff überstöchiometrisch vor. Der Mischer kann mit einer Gasdüsenplatte versehen sein, die eine Einstellung auf Erdgas oder Flüssiggas gestattet. Die Gas-Absperrarmatur, die von einem Feuerungsautomaten 8 gesteuert wird, ist in Fig. 1 nicht dargestellt. Hinter der Mischvorrichtung 7 wird das überstöchiometrische Gemisch durch ein Mischrohr zur Brennerplatte 20 geleitet.

Ein Kaltwassereintrittsstutzen 9, der mit der Kaltwasserleitung verbunden ist, mündet in den Bodenbereich des Speicherbehälters 1. Er ist Bestandteil des Ladekreises und mit dem unteren Ende der Mittelbohrung des Wärmetauscherprofils 4 bzw. mit dem in die Mittelbohrung eingepreßten Kupferrohr 5 verbunden. Von einer Umwälzpumpe 10 wird das Kaltwasser aus dem unteren Bereich des Speicherbehälters 1 bzw. aus der Kaltwasserleitung durch den Wärmetauscher 3, 4, 5 von unten nach oben in Richtung des Pfeils B gepumpt und über eine Rückführungsleitung 11 und eine Drossel 12 durch einen Stutzen 13 in den oberen Teil des Speicherbehälters 1 zurückgepumpt. Die Drossel 12 ist im beschriebenen Ausführungsbeispiel als Magnetventil ausgebildet, das über eine nachfolgend genauer erläuterte, als strichpunktierter Block dargestellte Steuerschaltung 14 bei bestimmten Ladevorgängen in einer Drosselstellung gehalten und bei anderen Betriebszuständen geöffnet ist.

Bedingt durch die Anordnung und Ausbildung des Brenners 2 als Sturzbrenner, die besondere Ausbildung und konzentrische Anordnung des Wärmetauscherprofils 4 im langgestreckten Speicherbehälter 1 und die Führung des zu erwärmenden Wassers im Gegenstrom (Pfeil B) zu dem in Richtung der Pfeile A von oben nach unten verlaufenden Abgasstrom gelingt es, das Kaltwasser aus dem Eintrittsstutzen 9 bzw. der Kaltwasserleitung von einer Temperatur von beispielsweise 15 °C in einem Schritt auf eine Solltemperatur von etwa 60 °C in der Rückführleitung 11 des Ladekreises zu erwärmen. Das erforderliche $\Delta T$ von etwa 45 °K wird bei der hier erforderlichen niedrigen Umlaufmenge mit einem Brenner 2 erreicht, der nur für eine Nennwärmebelastung von etwa 4 kW ausgelegt ist. Dies führt zu einer langen Betriebszeit des Brenners und damit zu einer geringen Schalthäufigkeit. Die niedrige Zulauftemperatur des am unteren Ende in den Abgaswärmetauscher eintretenden Wassers (Kaltwasser) und der intensive Wärmetausch im relativ langen Wärmetauscherabschnitt gewährleisten neben hervorragenden Aufheizwirkungsgraden einen hohen Kondensationsgrad. Das Abgaskondensat wird am unteren Ende der Abgasführung entsprechend der Darstellung in Figur 1 abgeführt; das Abgas wird über ein dichtes Abgasrohr 15 ins Freie geleitet.

Die Steuerung des Brenners 2, der Umwälzpumpe 10 und der Drossel 12 erfolgt bei dem in Figur 1 dargestellten Ausführungsbeispiel mit Hilfe von drei Temperaturfühlern 21, 22 und 23 und eines die Strömung in der Warmwasser-Entnahmeleitung 16 überwachenden Strömungswächters 24. Der erste Temperaturfühler 21 mißt die Wassertemperatur im unteren Bereich des Speicherbehälters 1 und schaltet über einen im Einschaltkreis des Brenners 2 und der Umwälzpumpe 10 angeordneten Schaltkontakt $S_{21}$ Brenner und Umwälzpumpe ein, wenn die Temperatur einen unteren Grenzwert von beispielsweise 55 °C unterschreitet. Ein nahe des Warmwasseraustritts 13 angeordneter zweiter Temperaturmeßfühler 22 schaltet sowohl Brenner als auch Umwälzpumpe über einen Schaltkontakt $S_{22}$ ab und beendet dadurch den Ladevorgang, wenn die Wassertemperatur im oberen Bereich des Speicherbehälters einen oberen Grenzwert von beispielsweise 60 °C überschreitet. Der Ladebetrieb wird daher bis zu einem Temperaturgefälle des Speicherwassers von ca. 5 °K aufrechterhalten, wobei die Umlaufmenge durch den Ladekreis über die voll geöffnete Drossel 12 groß ist.

In der Nähe des Kaltwassereintrittsstutzens 9 ist am Boden des Speicherbehälters 1 der dritte Temperaturfühler 23 angeordnet, der über einen im Erregerstromkreis des Drosselmagnetventils 12 angeordneten Schaltkontakt $S_{23}$ entscheidet, ob mit einer kleinen Umlaufmenge von beispielsweise 70 l/h oder einer großen Umlaufmenge von beispielsweise 700 l/h geladen wird. Entspricht die vom dritten Temperaturfühler 23 gemessene Temperatur der Kaltwassertemperatur (z. B. ≤ 15 °C), so wird der Erregerkreis zur Drossel 12 durch Öffnen des Schaltkontakts $S_{23}$ unterbrochen und der Volumenstrom in der Leitung 11 entsprechend gedrosselt. Oberhalb der Kaltwassertemperatur ist der Schaltkontakt $S_{23}$ geschlossen.

Bei Brauchwasserentnahme durch die Leitung 16 öffnet der Strömungswächter 24 über den ihm zugeordneten Schaltkontakt $S_{24}$ den Erregerkreis der Drossel 12 und setzt diese in den Drosselzustand mit kleiner Umlaufmenge (70 l/h).

Als Überhitzungsschutz ist an der Wasserführung in der Nähe der Brennerplatte 20 ein Temperaturbegrenzer 25 vorgesehen, der bei einer Wassertemperatur von beispielsweise mehr als 90 °C den Brenner über den ihm zugeordneten Schaltkontakt $S_{25}$ ausschaltet.

Bei einer erstmaligen Aufladung oder einer Nachladung, bei der Kaltwasser aus dem unteren Bereich des Speicherbehälters 1 durch den Wärmetauscher gepumpt wird, ist der Volumenstrom über die Drossel 12 auf beispielsweise 70 l/h begrenzt, und das Kaltwasser wird von beispielsweise 15 °C auf ca. 60 °C aufgewärmt und durch den Stutzen 13 in den Speicherbehälter 1 zurückgeführt.

Bei einer Nachladung, die durch Abkühlung des Brauchwassers um etwa 5 °K erforderlich wird, öffnet die Drossel 12 bei geschlossenen Schaltkontakten $S_{23}$ und $S_{24}$, wodurch der Ladekreis den etwa 10-fachen Volumenstrom von beispielsweise 700 l/h führt. Dadurch wird nur 1/10 der zum Aufladen benötigten Temperaturerhöhung, nämlich rund 5 °K erreicht.

Bei Brauchwasserzapfung während des Ladevorgangs wird der Erregerstromkreis zum Drossel-Magnetventil 12 über den Schaltkontakt $S_{24}$ unterbrochen. Parallel zur Wasserentnahme aus dem Speicherbehälter 1 durch die Entnahmeleitung 16 findet ein Durchlauferhitzerbetrieb mit einer Durchlaufmenge von ca. 70 l/h durch den Ladekreis 5, 10, 11, 12 statt, wodurch die Kapazität des Speichers entsprechend vergrößert wird.

Bei dem beschriebenen Vorratswasserheizer erfolgt an dem verwendeten Wärmetauscherprofil 4 unter Ausnutzung des Gegenstromprinzips in einem Schritt die Abkühlung des Abgases bis unterhalb des Taupunktes. Es werden hervorragende Aufheizwirkungsgrade erreicht, die zusammen mit den gegenüber konventionellen Vorratswasserheizern wesentlich verminderten Stillstandsverlusten zu hohen Jahreswirkungsgraden führen.

**Patentansprüche**

1. Vorratswasserheizanlage mit einem Speicherbehälter, einem mit einer Umwälzpumpe versehenen Ladekreis, der an zwei beabstandeten Stellen in den Speicherbehälter mündet und über diesen geschlossen ist, einem Brenner und einem Abgaswärmetauscher zum Aufwärmen des durch den Ladekreislauf geführten Brauchwassers des Speicherbehälters, dadurch gekennzeichnet, daß der Brenner (2) als Sturzbrenner ausgebildet und am oberen Ende eines vertikal verlaufenden Abgasführungsrohrs (3) angeschlossen ist, ein den Abgaswärmetauscher bildendes Wärmetauscherprofil (4) mit sternförmigem Querschnitt koaxial im Abgasführungsrohr (3) angeordnet ist und eine Mittelbohrung hat, durch die der Ladekreislauf mit einer dem Abgasstrom (A) entgegengerichteten Brauchwasserströmung (B) geführt ist, und der Brenner (2) und/oder der Volumenstrom durch den Ladekreis in Abhängigkeit von wenigstens einem im Speicherbehälter (1) angeordneten Temperaturfühler (21, 22, 23) derart geregelt ist oder sind, daß eine im wesentlichen konstante Warmwasser-Temperatur eingestellt werden kann.

2. Vorratswasserheizanlage nach Anspruch 1, dadurch gekennzeichnet daß das Abgasführungsrohr (3) konzentrisch durch den Speicherbehälter (1) verläuft.

3. Vorratswasserheizanlage nach Anspruch 1 oder 2, dadurch gekennzeichnet, daß das Wärmetauscherprofil (4) ein Strangpreßprofil aus einer Aluminiumlegierung ist, die gegenüber dem Abgaskondensat korrosionsbeständig ist, und daß in die Mittelbohrung des Profils ein einen Abschnitt des Ladekreises bildendes Kupferrohr (5) eingepreßt ist.

4. Vorratswasserheizanlage nach einem der Ansprüche 1 bis 3, dadurch gekennzeichnet, daß der Ladekreis mit einem Kaltwassereintritt (9) im Bodenbereich des Speicherbehälters (1) verbunden, von unten in die Mittelbohrung des Wärmetauscherprofils (4) geführt und in den oberen Bereich des Speicherbehälters (1) zurückgeführt ist.

5. Vorratswasserheizanlage nach Anspruch 4, dadurch gekennzeichnet, daß der Brenner (2) mit überstöchiometrischer Verbrennung arbeitet und eine kreisförmige Brennerplatte (20) mit einer Vielzahl von Gemischdurchtrittsöffnungen mit einem Durchmesser von 1 bis 2 mm, vorzugsweise 1,8 mm aufweist, daß die Brennerplatte (20) in der Nähe des oberen Endes des Wärmetauscherprofils (4) am Abgasrohr (3) befestigt ist und daß das wasserführende Rohr (5) des Ladekreises durch die Brennerplatte durchgeführt ist und mit der Brennerplatte zu deren Kühlung in wärmeleitender Verbindung steht.

6. Vorratswasserheizanlage nach Anspruch 5, dadurch gekennzeichnet, daß die Gemischdurchtrittsöffnungen ringförmig in der Brennerplatte (20) angeordnet sind und letztere von dem wasserführenden Rohr (5) konzentrisch durchsetzt ist.

7. Vorratswasserheizanlage nach einem der Ansprüche 1 bis 6, dadurch gekennzeichnet, daß die Rückführleitung (11) des Ladekreises mit dem Warmwasser-Entnahmestutzen (13) verbunden ist, der in den oberen Bereich des Speicherbehälters (1) mündet.

8. Vorratswasserheizanlage nach einem der Ansprüche 1 bis 7, dadurch gekennzeichnet, daß ein die Wassertemperatur im unteren Bereich des Speicherbehälters (1) messender erster Temperaturfühler (21) und ein die Wassertemperatur im oberen Bereich des Speicherbehälters messender zweiter Temperaturfühler (22) vorgesehen sind, die im Schaltkreis (14) des Brenners angeordnete Schalter ($S_{21}$, $S_{22}$) betätigen, daß der Brenner (2) durch den ersten Temperaturfühler (21) einschaltbar ist, wenn dessen Meßtemperatur eine untere Grenztemperatur unterschreitet und daß der Brenner (2) durch den zweiten Temperaturfühler (22) ausschaltbar ist, wenn dessen Meßtemperatur einen oberhalb der unteren Grenztemperatur gelegenen oberen Temperatur-Grenzwert überschreitet.

9. Vorratswasserheizanlage nach einem der Ansprüche 1 bis 8, dadurch gekennzeichnet, daß im Ladekreis eine verstellbare Drossel 12 eingebaut ist.

10. Vorratswasserheizanlage nach Anspruch 9, dadurch gekennzeichnet, daß in der Wasser-Entnahmeleitung (16) ein Strömungswächter (22) angeordnet ist, der so mit einem das Stellglied der Drossel (12) steuernden Schaltkreis verbunden ist, daß bei Wasserentnahme der Volumenstrom im Ladekreis auf einen vorgegebenen Wert gedrosselt wird.

11. Vorratswasserheizanlage nach Anspruch 9 oder 10, dadurch gekennzeichnet, daß nahe des Kaltwassereintrittsstutzens (9) im Bodenbereich des Speicherbehälters (1) ein weiterer Temperaturfühler (23) angeordnet ist, der so mit dem das Stellglied der Drossel (12) steuernden Schaltkreis gekoppelt ist, daß bei einer der Kaltwassertemperatur entsprechenden Meßtemperatur im Speicherbehälter (1) der Volumenstrom im Ladekreis auf einen vorgegebenen Wert gedrosselt wird.

12. Vorratswasserheizanlage nach einem der Ansprüche 1 bis 8, dadurch gekennzeichnet, daß der Brenner (2) temperaturabhängig modulierend geregelt ist.

13. Vorratswasserheizanlage nach einem der Ansprüche 1 bis 8, dadurch gekennzeichnet, daß die Umwälzpumpe (10) in Abhängigkeit von der Brauchwassertemperatur stufenlos regelbar ist.

**Claims**

1. A storage water heater system comprising a storage reservoir ; a primary circuit incorporating a circulation pump, said primary circuit connected at two different points to said storage reservoir and having its loop closed through said storage reservoir ; burner means and heat exchanger means for preheating water from said storage reservoir circulating through said primary circuit ; characterized in that said burner means is provided as an inverted burner and connected to the top end of a vertical flueway (3) ; said heat exchanger means comprising an extruded heat exchanger (4) of a star-shaped cross section arranged coaxially in said flueway (3), with primary-circuit water passing through a central bore of said heat exchanger in a direction of flow (B) opposite to the direction of flow of the products of combustion (A) ; said burner means and/or the flow rate through said primary circuit is (are) controlled in response to temperature by at least one temperature measuring device arranged in said reservoir so that hot water is made available by the storage water heater system at a substantially constant temperature.

2. A storage water heater system according to claim 1, characterized in that said flueway (2) is concentric with said reservoir (1).

3. A storage water heater system according to claims 1 or 2, characterized in that said heat exchanger (4) is from extruded aluminium alloy material resistant to corrosion by the condensate produced in said flueway (4) and in that copper pipework (5) incorporated in said heat exchanger means forms part of said primary circuit.

4. A storage water heater system according to any one of claims 1 through 3, characterized in that said primary circuit connected with a cold water inlet in the bottom part of said water reservoir (1) extends upwards to said central bore of said heat exchanger (4) and returns to the upper reservoir (1) region.

5. A storage water heater system according to claim 4, characterized in that said burner means (2) combusts a fuel-lean mixture and incorporates a circular burner plate (20) with numerous fuel/air mixture orifices of a diameter of 1 to 2 mm and preferably 1.8 mm, and in that said burner plate is fitted to said flueway (3) near the upper end of said heat exchanger (4), and in that the primary-circuit water pipework (5) passes through said burner plate so cooling said burner plate.

6. A storage water heating system according to claim 5, characterized in that said orifices form an annular pattern in said burner plate (20) and in that the latter incorporates said water pipework (5) in a concentric arrangement.

7. A storage water heater system according to any one of claims 1 through 6, characterized in that the primary-circuit return pipework (11) is connected with a hot water outlet (13) opening into the upper storage reservoir (1) region.

8. A storage water heater system according to any one of claims 1 through 7 characterized in that said system comprises one temperature measuring device (21) for measuring the water temperature in the lower region of said storage reservoir (1) and a second temperature measuring device (22) for measuring the temperature in the upper region of said storage reservoir (1), said temperature measuring devices actuating switches ($S_{21}$, $S_{22}$) integrated in the control logic (14) of said burner means (2), and in that said burner means (2) is lit upon said first temperature measuring device (21) measuring a temperature below a lower limit temperature and in that said burner means (2) is shut off upon said second temperature measuring device (22) measuring a temperature above an upper limit temperature, said upper limit temperature being higher than said lower limit temperature.

9. A storage water heater system according to any one of claims 1 through 8, characterized in that said primary circuit comprises an adjustable flow control device (12).

10. A storage water heater system according to claim 9, characterized in that the secondary circuit (16) comprises a switch (22) coupled with an actuator of said flow control device (12) by means of a control loop, the flow through the primary circuit being reduced to a set flow rate as water is tapped from said secondary circuit.

11. A storage water heater system according to claims 9 or 10, characterized in that a further temperature measuring device (23) is arranged in the bottom region of the storage reservoir (1) close to the cold water inlet (9), said temperature. measuring device (23) being coupled with the actuator of said flow control device (12) by means of a control loop, flow in the primary circuit being reduced to a set flow rate if and when a temperature equal to the cold water temperature is measured at the bottom of said storage reservoir (1).

12. A storage water heater system according to any one of claims 1 through 8, characterized in that said burner means (2) is lit, shut down and/or controlled as a function of temperature.

13. A storage water heater system according to any one of claims 1 through 8, characterized in that a circulation pump (10) is controlled as a function of the water temperature by means of a continuously adjusting control system.

**Revendications**

1. Chauffe-eau à accumulation comprenant un réservoir, un circuit primaire équipé d'une pompe de circulation, ledit circuit primaire étant connecté à deux points différents audit réservoir et étant fermé à travers ce dernier, un brûleur et un échangeur de chaleur pour le réchauffage de l'eau du réservoir circulant à travers ledit circuit primaire ; caractérisé par le fait que le brûleur (2) est conçu comme bec renversé et intégré dans la partie supérieure d'un passage de fumées (3) verticale, que l'échangeur de chaleur (4), conçu comme profilé et ayant sa coupe transversale en forme d'étoile, est disposé coaxialement dans ledit passage de fumées (3) et à travers le perçage central duquel passe l'eau du circuit primaire dans une direction opposée (B) à la direction de l'écoulement des fumées (A), et que le brûleur (2) et/ou le débit volumique passant à travers le circuit primaire est (sont) réglé(s) par un dispositif de réglage comprenant au moins un capteur de température (21, 22, 23) disposé dans le réservoir (1) de façon à ce que de l'eau chaude sanitaire est mise à disposition par le chauffe-eau à accumulation à une température substantiellement constante.

2. Chauffe-eau à accumulation selon la revendication 1, caractérisé par le fait que ledit passage de fumées (3) passe de manière concentrique à travers ledit réservoir (1).

3. Chauffe-eau à accumulation selon l'une quelconque des revendications 1 ou 2, caractérisé par le fait que ledit échangeur de chaleur (4) est en matériau d'alliage d'aluminium extrudé résistant à la corrosion pouvant être provoquée par le condensat produit dans ledit passage de fumées et qu'une conduite d'eau en cuivre (5) faisant partie dudit circuit primaire est incorporée dans ledit échangeur de chaleur.

4. Chauffe-eau à accumulation selon l'une quelconque des revendications 1 à 3, caractérisé par le fait que le circuit primaire est connecté à une entrée d'eau froide (9) à la partie inférieure du réservoir (1), que ladite entrée d'eau froide est connectée à l'entrée dudit échangeur de chaleur (4) et que l'eau chauffée entre dans le réservoir (1) à sa partie supérieure.

5. Chauffe-eau à accumulation selon la revendication 4, caractérisé par le fait que le brûleur (2) fonctionne en excès d'air et comporte une plaque de brûleur circulaire (20) avec de nombreuses orifices d'entrée du mélange air/gaz d'un diamètre de 1 à 2 mm, de préférence 1,8 mm, que ladite plaque de brûleur (20) est fixée au passage de fumées (3) à proximité de la partie supérieure de l'échangeur de chaleur (4), et que la conduite d'eau (5) du circuit primaire passe à travers ladite plaque de brûleur pour refroidir cette dernière.

6. Chauffe-eau à accumulation selon la revendication 5, caractérisé par le fait que lesdites orifices d'entrée sont disposées de façon annulaire dans ladite plaque de brûleur (20) et que la conduite d'eau (5) passe à travers celle-ci de manière concentrique.

7. Chauffe-eau à accumulation selon l'une quelconque des revendications 1 à 6, caractérisé par le fait que la conduite de retour (11) du circuit primaire est connecté à une tubulure d'entrée d'eau chaude (13), ladite tubulure entrant dans le réservoir (1) à sa partie supérieure.

8. Chauffe-eau à accumulation selon l'une quelconque des revendications 1 à 7, caractérisé par le fait que ledit dispositif de réglage comprend un premier capteur de température (21) pour le mesurage de la température d'eau dans la partie inférieure du réservoir (1) et un deuxième capteur de température (22) pour le mesurage de la température d'eau dans la partie supérieure dudit réservoir, que lesdits capteurs de température actionnent des interrupteurs ($S_{21}$, $S_{22}$) dans le circuit de régulation (14) du brûleur, que le brûleur (2) est allumé par le premier capteur de température (21) mesurant une température en dessous d'un seuil inférieur, et arrêté par le deuxième capteur de température (22) mesurant une température en dessus d'un seuil supérieur, ce dernier étant supérieur audit seuil inférieur.

9. Chauffe-eau à accumulation selon l'une quelconque des revendications 1 à 8, caractérisé par le fait que ledit circuit primaire comprend un dispositif de régulation de débit réglable (12).

10. Chauffe-eau à accumulation selon la revendication 9, caractérisé par le fait que le circuit secondaire (16) est équipé d'un capteur de débit lié au vérin dudit dispositif de régulation de débit (12) par un circuit de commande, l'écoulement d'eau dans le circuit primaire étant réduit à un débit de consigne lorsque de l'eau est puisée du circuit secondaire.

11. Chauffe-eau à accumulation selon l'une quelconque des revendications 9 ou 10, caractérisé par le fait qu'un autre capteur de température (23) est disposé à la partie inférieure du réservoir (1) à proximité de l'entrée d'eau froide (9), ledit capteur de température étant lié au vérin dudit dispositif de régulation de débit (12) par un circuit de commande, l'écoulement d'eau dans le circuit primaire étant réduit à un débit de consigne lorsqu'une température correspondant à la température d'eau froide est mesurée à la partie inférieure dudit réservoir (1).

12. Chauffe-eau à accumulation selon l'une quelconque des revendications 1 à 8, caractérisé par le fait que le brûleur (2) est allumé, arrêté et/ou réglé en fonction de la température.

13. Chauffe-eau à accumulation selon l'une quelconque des revendications 1 à 8, caractérisé par le fait que la pompe de circulation (10) est réglée en fonction de la température d'eau par un réglage continu.

*Fig. 1*

Fig. 2